# EUROPEAN PATENT APPLICATION

(11) **EP 0 636 644 A1**
(43) Date of publication of application: **01.02.1995**
(21) Application number: 94201969.6
(22) Date of filing: 07.07.1994
(51) Int. Cl.: C08J 5/04, C08L 23/00, C09K 19/38

(54) **Process for the preparation of self-reinforcing composite systems**

(30) Priority: 09.07.1993 EP 93202035
(71) Applicant: SHELL INTERNATIONALE RESEARCH MAATSCHAPPIJ B.V., NL-2596 HR Den Haag (NL)
(72) Inventor: Postema, Aaldrik Roelf, NL-1031 CM Amsterdam (NL); Schipper, Gervinius Petrus, NL-1689 HN Zwaag (NL); Scott, John Alexander Nicholl, c/o Shell Research, B-1348 Ottignies Louvan-La-Neuve (BE)

(57) **Abstract**

Process for the preparation of a self-reinforcing composite system, wherein a blend of a polyolefin and a liquid crystalline polymer (LCP), the polyolefin having a melt temperature which is lower than the solid-nematic phase transition temperature of the LCP, is subjected to processing under shear at a temperature which is 1 to 10 °C higher than the solid-nematic phase transition temperature of the LCP. The composite leaves the processing equipment under elongational stress and is immediately quenched.

## Description

The present invention relates to a process for the preparation of self-reinforcing composite systems. More particularly, the present invention relates to a process for preparing a self-reinforcing composite system comprising a thermoplastic polymer and a liquid crystalline polymer (LCP).

In POLYMER ENGINEERING AND SCIENCE, mid-May 1990, Vol. 30, No. 9, pp. 532-542 blends of thermotropic liquid crystalline polymers (TLCP) with on the one hand polystyrene (PS) and on the other hand a mixture of polystyrene and polyphenylene ether (PS/PPE) were investigated on their morphology, orientation and resulting mechanical properties. Compounding of the components was performed in an extruder at processing temperatures between 290 and 320 °C, where the TLCP is in the liquid crystalline or nematic phase. The strand leaving the extruder was directly quenched in a water bath, air-dried and chopped into granulate for further processing. Alternatively, strands were collected from the extruder at two different haul-off speeds. Further processing of the granulate involved the spinning into fibres, which was concluded to be a successful method of elongational deformation in order to induce fine fibrils with high aspect ratios. The mechanical properties, i.e. modulus and strength, were shown to increase at increasing TLCP contents, while elongational deformation was concluded to be very important for obtaining fibrillar structures with the corresponding good mechanical properties.

U.S. Patent No. 5,006,402 discloses a self-reinforced polymer composite comprising 5-60% by weight of a thermoplastic polymer having a melting point of at least 200 °C and 95-40% by weight of a melt processable aromatic polyester, which is a LCP. Said thermoplastic polymer serves as a matrix for the said polyester, which is present in the form of unidirectionally oriented fibres formed in situ in said matrix. In a process for preparing such polymer composites the thermoplastic polymer and the aromatic polyester are dry blended and thoroughly mixed at a temperature above the melting points of both polymers, suitably 300-400 °C, in a suitable mixing apparatus which will give thorough high strain mixing sufficient to cause fibre formation. An example of a suitable mixing apparatus is a single screw extruder in series with a static mixer and extrusion die. The hot blend leaving the mixing apparatus is subsequently quenched, and, if extruded in the form of a strand, after solidification chopped into pellets.

International patent application No. WO 91/01879 discloses a shaped, self-reinforced thermoplastic composite formed from several layers of self-reinforced thermoplastic material, each layer comprising long, essentially unidirectionally oriented fibres of a LCP and a matrix of a thermoplastic base polymer. Both said polymers have an overlapping melt processing temperature range with the LCP having a melting point higher than the minimum melt processing temperature of the thermoplastic base polymer. The composite is made by a process wherein said layers are prepared first by forming the LCP fibres in situ in the base polymer matrix under fibre forming conditions, after which the individual layers are stacked to form a lay-up. This lay-up finally, is shaped into a coherent shaped reinforced thermoplastic composite under heat and pressure. From the disclosure of WO 91/01879 it becomes clear that the base polymer and the LCP must be be mixed in a mixing apparatus at a processing temperature above the melting point of said base polymer as well as above the melting point of said LCP. A suitable mixing apparatus for instance is an extruder, optionally followed by a static mixer. The patent application is silent about possible cooling measures to be taken. Furthermore, it is taught that the amount of LCP in a composite laminate preferably is 40 to 95% by weight, more preferably 50 to 90% by weight, the balance being essentially thermoplastic base polymer.

The processes disclosed require a processing temperature at which both the thermoplastic matrix polymer and the LCP are melt processable. Since the melting point of LCP's, which are useful in the process of the present invention, generally is at least 270 °C, high processing temperatures are required. This is illustrated by the above three references, where actual processing temperatures are all above the melting temperature of the LCP. However, one should bear in mind that said processing temperature is also limited by the degradation temperature of the thermoplastic polymer. Accordingly, if a polyolefin would serve as the thermoplastic polymer, processing temperatures of 270 °C or higher seem too high, because at such high temperatures the polyolefin degrades. On the other hand, operating at temperatures below 270 °C is also not desired, as at such temperatures the LCP remains in the solid state and this negatively influences the miscibility of the LCP and the thermoplastic polymer. At such lower processing temperatures namely, the solid LCP will not be distributed throughout the thermoplastic polymer matrix in an optimum sense.

PCT patent application No. WO 92/18568 discloses blends comprising a polyolefin and a LCP, wherein a maleated polyolefin is added to enhance the compatibility between the polyolefin and the LCP. According to WO 92/18568 the problem of thermal processing temperatures of LCP and polyolefin not overlapping can be overcome by separately preparing a molten polyolefin/maleated polyolefin stream from one extruder with a molten LCP stream from another extruder and subsequently blending these two streams in a static mixer at a temperature of between 200 and 250 °C, which is below the melting temperature of the LCP as well as below the degradation temperature of the polyolefin and maleated polyolefin. It will be appreciated that such process requires relatively much equipment with all the resulting problems of mutual tuning and high costs.

It is an object of the present invention to provide a process for the preparation of a self-reinforcing composite system comprising a polyolefin matrix polymer and an LCP, which is easy to perform, requires less equipment and results in a recyclable self-reinforcing composite having excellent mechanical properties, such as modulus and strength. More particularly, it is an object of the present invention to provide a process for the preparation of a recyclable self-reinforcing composite system, wherein the components can be blended and processed in one step. It has now been surprisingly found that when processing a polyolefin/LCP blend in a specific temperature range above the solid-nematic phase transition temperature of the LCP, self-reinforced composites can be obtained having excellent mechanical properties despite some degradation of the polyolefin.

Accordingly, the present invention relates to a process for the preparation of a self-reinforcing composite, wherein a blend of a thermoplastic polymer and a liquid crystalline polymer (LCP), the thermoplastic polymer having a melt temperature which is lower than the solid-nematic phase transition temperature of the LCP, is subjected to processing under shear, after which it leaves the processing equipment under elongational stress thereby being cooled to a temperature at which the LCP is in the solid state, characterized in that the thermoplastic polymer is a polyolefin and the processing takes place at a temperature which is 1 to 10 °C, preferably 2 to 6 °C, higher than the solid-nematic phase transition temperature of the LCP with the proviso that this temperature is still below the isotropisation temperature of the LCP.

In this connection it is noted that the term "isotropisation temperature" with respect to a LCP refers to the temperature at which the transition of a LCP from the nematic phase to the isotropic phase or vice versa takes place. An LCP, namely, consists of long polymeric molecules. The state in which an LCP is liquid and the long LCP molecules are randomly distributed is called the isotropic phase. In this phase the LCP molecules can freely move and are not ordered in any direction at all. The subsequent phase is called the nematic phase. This is the state between the isotropic phase and the solid phase, wherein the LCP molecules are ordered in a parallel fashion relative to one another and can move in the longitudinal direction without losing their order. In fact, the nematic phase could also be referred to as the "liquid crystalline" state. The state following the nematic phase, finally, is the solid phase. In the solid phase the LCP molecules are fixed in a parallel oriented state. The temperature at which an LCP transfers from the solid phase to the nematic phase is called the solid-nematic phase transition temperature.

LCP's which are useful in the process of the present invention are those LCP's showing isotropic behaviour in the liquid phase and being anisotropic as well as unidirectionally oriented in the solid phase, while in a liquid mesophase thereinbetween, i.e. the nematic phase, they exhibit liquid crystalline behaviour. Such LCP's are often referred to as thermotropic LCP's. Accordingly, LCP's which decompose before melting or which are not unidirectionally oriented in the solid phase are explicitly excluded from the scope of the present invention. Suitable thermotropic LCP's then include fully aromatic polyesters and polyesteramides, such as those commercially available from Hoechst Celanese under the trade name Vectra (Vectra is a trade mark). Specific examples are (i) Vectra B950, a wholly aromatic liquid crystal polyesteramide containing naphthoic moieties in the polymer chain, and (ii) Vectra A950, an aromatic copolyester, also containing naphthoic moieties in the polymer chain. It has a solid-nematic phase transition temperature of 280 °C, so the preferred processing temperature in accordance with the present invention is from 281 to 290 °C and preferably from 282 to 286 °C. Very good results are obtained at 285 °C.

The process of the present invention is particularly suitable for the preparation of composite systems, whereby the initial blend of polyolefin and LCP comprises in the range of from 75 to 99% by weight, more preferably 85 to 95% by weight, of polyolefin and in the range of from 25 to 1% by weight, more preferably 15 to 5% by weight, of LCP.

The polyolefins useful in the process of the present invention include homopolymers of monoolefins, particularly alpha-olefins, such as high density polyethylene and polypropylene. Copolymers of olefins may also be used. Examples are ethylene-propylene copolymers and the well known EPDM polymers. Mixtures of two or more of the polyolefin homo- and/or copolymers may also be used. In a preferred embodiment of the present invention polypropylene is used as the polyolefin.

The mutual ratio of the viscosities of both polyolefin and LCP during the processing under shear is also a factor which has an impact on the properties of the final composite system, as it influences the deformation of the LCP-phase into a fibre-phase. It is preferred that the ratio of the viscosity of the LCP relative to the viscosity of the polyolefin is in the range of from 0.5 to 6, more preferably 1 to 4, at a shear stress of 10-50 kPa.

The processing under shear in principle may take place in any suitable mixing apparatus which can generate sufficient shear to process the thermoplastic-LCP blend. Such mixing apparatus for instance may be a static mixer or an extruder. Preferably, the processing under shear is performed in an extruder. It will be understood that the final shape of the composite system leaving the extruder is determined by the extrusion head. For instance, the extruder may be provided with a single-hole extrusion head resulting in a mono-filament strand leaving the extruder or alternatively may be provided with a multi-hole extrusion head as a result of which fused multi-filament strands are obtained. Such multi-filament strands are consequently composed of several mono-filament strands fused together when leaving the extruder. It will be appreciated that this fusion takes place because the various single-filament composite strands simultaneously leaving the multi-hole extrusion head are still at a temperature above the matrix crystallisation temperature and consequently they adhere to each other. Upon immediate cooling this "adhered state" is then fixed and a fused multi-filament strand is obtained. The multi-filament strands can subsequently be pelletized or granulated. In yet another embodiment the extrusion head contains a slit due to which sheets of composite material are obtained. In general, the composite leaving the extruder may be given any desired shape by means of the extrusion head.

It is essential that the polyolefin/LCP composite leaves the processing apparatus under elongational stress in order to obtain long (molecular oriented) LCP fibres in the polyolefin matrix. During processing namely, the LCP is dispersed in the polyolefin. The energetically most favourable state is that state in which the LCP is dispersed in small spheres. By applying elongational stress to the LCP/polyolefin dispersion said small spheres are elongated into long fibres. By immediately cooling the composite leaving the processing apparatus to a temperature at which the LCP is in the solid phase, said fibrous state is fixed and the LCP remains present in the composite in fibrous form. Cooling may suitably be realized by a water bath or by just exposing the hot composite to air of room temperature when it leaves the processing apparatus.

The compatibility between the polar LCP and the apolar polyolefin matrix may be improved by modifying the polyolefin with a polar group containing compound. Accordingly, the polyolefin may be modified by at least one molecule containing at least one polar group. Such modification may for instance take place by grafting the polar group containing molecules onto the polyolefin backbone. Suitable polar group containing molecules then include aliphatic as well as aromatic unsaturated carboxylic acids or derivatives therefrom, such as e.g. acrylic acid, methacrylic acid, maleic acid, maleic anhydride and 3-azido sulphonyl benzoic acid (ASB). Maleic anhydride and ASB are preferred. The amount in which the polar group containing compound should be present in the modified polyolefin may vary within wide limits, but preferably is in the range of from 0.1 to 10%, more preferably 0.2 to 5%, by weight based on the total weight of modified polyolefin.

The blend of polyolefin and LCP to be processed under shear may suitably be prepared by feeding both components, e.g. in powder, pellet or granulate form, into an extruder where the processing under shear at the specified temperature subsequently takes place. Alternatively, said blend may prepared by first dry-blending the polyolefin and the LCP and then feeding this blend into the extruder. The hot composite leaves the extruder under elongational stress and is immediately quenched. This can be conveniently realized by drawing the composite strand through a water bath by means of a take-off device, such as e.g. a winding roll, or a granulator, which is located after the water bath. The strand thus obtained may be pelletized. Hence, a typical way of performing the process of the present invention is applying the following process steps:
(a) feeding the polyolefin and the LCP into an extruder,
(b) processing under shear at a temperature which is 1 to 10 °C higher than the solid-nematic phase transition temperature of the LCP,
(c) immediately quenching the hot composite strand leaving the extruder in a water bath, while elongational stress is applied by means of a winding roll which is located after the water bath, and optionally
(d) pelletizing the self-reinforcing composite strand thus obtained.
The strands or, if pelletized, the pellets obtained are very useful for further processing at temperatures between the melting point of the polyolefin and the solid-nematic phase transition temperature of the LCP. By processing at this temperature namely, the polyolefin matrix melts, while the long LCP fibres remain intact.

When extruding beneficial effects may be obtained when selecting the ratio of the viscosities at the processing temperature of the LCP and the polyolefin within the range of from 1 to 5.5 preferably from 1.5 to 5.0. (The defined viscosities are measured at shear stress of from 40 to 50 kPa.) This may lead to improvement of tensile strength and E-modulus.

The self-reinforcing composites prepared according to the process of the present invention are very useful in applications where at present glass fibre-reinforced polypropylene articles are used, such as e.g. in various parts of automobiles.

It will be understood that shaped articles whenever comprising a self-reinforcing composite material prepared according to the process of the present invention also form a part of this invention.

The invention is further illustrated by the following examples without restricting the scope of the invention to these specific embodiments.

### Example 1

This example illustrates the melt-blending and melt-spinning of thermotropic liquid crystalline polymers (Vectra A950 and Vectra B950 ex Hoechst) with polypropylene (SY 6100 ex Shell, melt index 11 dg/min.) in a weight ratio of 10/90.

Prior to the dry-blending with the polypropylene the LCP pellets were dried overnight at 115 °C in a vacuum oven under a mild stream of nitrogen. The blends were extruded in a 25 mm Plamvo single screw extruder equipped with a strand die with a conical entrance and an orifice of 1.3 mm in diameter. Screw speed was 16 rotations per minute (RPM). The extruder zone temperatures were chosen so that mass temperatures were obtained of 285 °C, 5 °C above the solid-nematic phase transition temperature of the LCP. Leaving the extruder exit the hot strands were immediately drawn to various draw down ratios and subsequently cooled in a water bath. Winding speed was increased until breakage of the extrudates occurred.

For comparison also the pure LCP's and the pure polypropylene were melt-spun under same conditions as above.

It was found, by optical microscopy, that mild drawing in the molten state already produced thinner extrudates with an improved LCP fibre distribution and fibre orientation. Higher drawing speeds led to an almost perfect LCP fibre orientation, smaller average LCP fibre diameter and narrower fibre diameter distribution. The aspect ratios of the LCP fibres thus obtained in the PP/LCP composites were larger than 100.

The tensile properties of the extrudates thus obtained were measured on an Instron 1195 testing machine. The gauge length was 50 mm, crosshead speed was 1 mm/min (up to 2% strain) followed by 2 mm/min, using on average 8 samples.

The maximum draw down ratios and maximum tensile moduli and strength are presented in Table 1. The draw down ratio was calculated by dividing the cross-section area of the orifice by the cross-section area of the extrudate.

**Table 1**

| | | | | | |
|---|---|---|---|---|---|
| PP-SY 6100 | 100 | 90 | 90 | - | - |
| Vectra A950 | - | 10 | - | 100 | - |
| Vectra B950 | - | - | 10 | - | 100 |
| Max. draw-down ratio | 34.9 | 27.5 | 25.0 | 70.3 | 55.8 |
| Max. tensile modulus (GPa) | 1.5 | 3.9 | 6.9 | 39.2 | 59.0 |
| Max. tensile strength (MPa) | 28.5 | 94.2 | 70.5 | 821 | 785 |

### Example 2

This example illustrates the influence of the extrudate mass temperature on the properties of self-reinforcing PP/LCP composites.

Mixtures of polypropylene and LCP (90/10 ratio) as specified in Example 1 were melt-blended in a 30 mm single screw extruder equipped with a strand die with a conical entrance and a diameter of 1.3 mm. The screw speed used was 10 rpm.

Extruder zone temperatures were varied so that mass temperatures were obtained below and above the solid-nematic phase transition temperature (280 °C) of the LCP's.

Blending and melt-spinning was carried out as in Example 1. The morphology of the melt-spun extrudates was studied by optical microscopy and by Confocal Scanning Laser Microscopy (CSLM). The tensile properties were measured as in Example 1 and are presented in Table 2.

**Table 2**

| PP-SY 6100/Vectra A950 (90/10) | | | | | | |
|---|---|---|---|---|---|---|
| Mass Temperature (°C) | 273 | 283 | 285 | 289 | 305 | 333 |
| Max. draw-down ratio | 6.2 | 27.5 | 27.5 | 9.7 | 11.9 | 10.8 |
| Max. tensile modulus (GPa) | 2.0 | 4.1 | 3.9 | 2.2 | 2.7 | 2.6 |
| Max. tensile strength (MPa) | 63.1 | 98.8 | 94.2 | 68.9 | 62.4 | 51.6 |

| PP-SY 6100/Vectra B950 (90/10) | | | | | | |
|---|---|---|---|---|---|---|
| Mass Temperature (°C) | 265 | 275 | 283 | 285 | 298 | 305 |
| Max. draw-down ratio | 7.0 | 8.8 | 25.0 | 25.0 | 10.9 | 10.7 |
| Max. tensile modulus (GPa) | 3.7 | 3.8 | 4.8 | 6.9 | 4.3 | 3.8 |
| Max. tensile strength (MPa) | 52.3 | 58.3 | 64.4 | 70.5 | 70.6 | 69.9 |

The results from the microscopic examination clearly showed that the samples made around the nematic-solid transition phase had the smallest fibre diameter, the best LCP fibre distribution with a high degree of orientation. At temperatures more than 5 °C above the LCP nematic phase transition temperature, the LCP fibre becomes increasingly thicker with consequently lower aspect ratios. The aspect ratio is defined as the quotient of length and diameter of the fibre. At high temperatures (300 °C) with the Vectra A950 system and also at lower temperature (273 °C) with the Vectra B950 system the LCP fibres are significantly thicker and much more irregular in diameter.

The maximum draw down ratio and the tensile properties indicate a clear optimum at mass temperature of about 5 °C above the nematic phase transition temperature.

### Example 3

This example shows the effect of increasing amounts of LCP in polypropylene on the draw down ratio and the tensile properties. Blends of polypropylene and various amounts of LCP (Vectra B950), 0 to 20 %w, were prepared and melt-blended as in Example 1. With exception of the neat PP which was cooled in a water bath, cooling after extrusion was now carried out in air. The draw down ratio and the tensile properties were determined as in Example 1.

The maximum draw down ratios and the maximum tensile modulus and strength are given in Table 3.

**Table 3**

| | | | | |
|---|---|---|---|---|
| PP-SY 6100 | 100 | 95 | 90 | 80 |
| Vectra B950 | - | 5 | 10 | 20 |
| Max. draw-down ratio | 34.9 | 24.3 | 38.7 | 28.6 |
| Max. tensile modulus (GPa) | 1.5 | 3.3 | 7.8 | 7.9 |
| Max. tensile strength (MPa) | 28.5 | 44.5 | 77.0 | 80.2 |

It was found that in general the tensile increased with the draw down ratio. Increasing draw down ratios, as was seen with optical and Scanning Electron Microscopy, also improved the LCP fibre distribution and led to smaller average fibre diameter and better orientation in flow direction of the extrudates.

### Example 4

This example illustrates the influence of the LCP/PP viscosity ratio on the LCP droplet deformation during the extrusion of self-reinforcing blends. The viscosities were determined by means of an Instron/Instrumat capillary rheometer under conditions representative for the blending process, i.e. a mass temperature 285 °C and a shear stress 40 kPa.

To determine the viscosities of the various blend components, a capillary was used of the following dimensions: L/D ratio 81, d = 1.26 mm and entrance angle of 90°. A Rabinowitch correction was applied for non-Newtonian flow. Due to the relatively high processing temperature, degradation of the PP matrix has to be expected. As a result, at the moment of droplet deformation (in and just outside the extruder-exit), the matrix viscosity will be reduced. To determine the correct viscosity values, the PP was first extruded under same conditions as used in the blending process. This processed and consequently "pre-degraded" PP (PP*) was used in the rheological experiments.

A direct viscosity determination of PP* at 285 °C would result in incorrect values, due to additional degradation during the capillary rheometer test itself. For this reason rheological measurements on PP* were performed at a temperature of 240 °C, at which the PP is still thermally stable during the time of the experiment. The viscosity values at 285 °C were subsequently computed using an Arrhenius equation and an activation energy of flow of 40.8 kJ/mole.

The thermotropic LCP used in this example is Vectra B950. Polypropylenes with different viscosities (melt-indexes) were used in the blending process. For the (90/10 w/w) blends that were processed at 285 °C (as described in Example 1) the results are presented in Table 4. The LCP/PP viscosity ratios are given at a shear stress of 40 kPa.

**Table 4**

| | | | | | | |
|---|---|---|---|---|---|---|
| Melt index PP (dg/min) (230 °C/2.16 kg) | 0.7 | 2.8 | 5.5 | 11.0 | 15.0 | 20.0 |
| LCP/PP viscosity ratio (285 °C/40 kPa) | 0.19 | 1.01 | 1.84 | 2.83 | 4.34 | 4.83 |
| Max. tensile modulus (GPa) | 1.9 | 2.8 | 3.7 | 6.9 | 3.3 | 3.2 |
| Max. tensile strength (MPa) | 36.1 | 49.0 | 67.3 | 70.5 | 48.9 | 49.1 |

### Example 5

This example illustrates the beneficial effects of modifying PP with either ASB (0.5 and 1 wt%) or maleic acid (0.8 wt%) on the properties of PP/LCP blends. Blends were prepared of the modified PP's with 10 wt% Vectra A950, according to Example 1. The mechanical properties of the produced extrudates are presented in Table 5.

**Table 5**

| | | | | | |
|---|---|---|---|---|---|
| PP-KY 6100 | 100 | 90 | - | - | - |
| PP-0.5 ASB | - | - | 90 | - | - |
| PP-1.0 ASB | - | - | - | 90 | - |
| PP-0.8 MA | - | - | - | - | 90 |
| Vectra A950 | - | 10 | 10 | 10 | 10 |
| Max. tensile modulus (GPa) | 1.1 | 2.7 | 3.2 | 3.6 | 3.4 |
| Max. tensile strength (MPa) | 26.8 | 52.0 | 52.9 | 70.0 | 84.9 |

### Example 6

Blends of 90 wt% PP with 10 wt% LCP (Vectra B950) were extruded through an 8-hole (diameter of the holes = 1.3 mm, entrance angle 90°) extrusion die head, at a temperature of 285 °C. The separate extrudate strands were then drawn and cooled to a temperature between the solidification temperature of LCP and PP. Subsequently, the separate strands were fused to a thick extrudate and further cooling to room temperature took place, these strands were granulated by conventional techniques. The cooling of these 8 thin strands was much more effective than the cooling of a thick extrudate strand having a similar overall volume. This faster cooling prevents the liquid LCP jets from contraction and distortion during the process more effectively.

## Claims

1. Process for the preparation of a self-reinforcing composite, wherein a blend of a thermoplastic polymer and a liquid crystalline polymer (LCP), the thermoplastic polymer having a melt temperature which is lower than the solid-nematic phase transition temperature of the LCP, is subjected to processing under shear, after which it leaves the processing equipment under elongational stress, thereby being cooled to a temperature at which the LCP is in the solid state, characterized in that the thermoplastic polymer is a polyolefin and the processing takes place at a temperature which is 1 to 10 °C higher than the solid-nematic phase transition temperature of the LCP with the proviso that this temperature is still below the isotropisation temperature of the LCP.

2. Process according to claim 1, characterized in that the processing takes place at a temperature which is 2 to 6 °C higher than the solid-nematic phase transition temperature of the LCP with the proviso that this temperature is still below the isotropisation temperature of the LCP.

3. Process according to claim 1 or 2, characterized in that the blend of polyolefin and LCP comprises in the range of from 75 to 99% by weight of polyolefin and in the range of from 25 to 1% by weight of LCP.

4. Process according to claim 3, characterized in that the blend of polyolefin and LCP comprises in the range of from 85 to 95% by weight of polyolefin and in the range of from 15 to 5% by weight of LCP.

5. Process according to any one of claims 1 to 4, characterized in that the polyolefin is polypropylene.

6. Process according to any one of claims 1 to 5, characterized in that the ratio between the viscosities of the LCP and the polyolefin is in the range of from 0.5 to 6 at a shear stress of 10-50 kPa.

7. Process according to claim 6, characterized in that the ratio between the viscosities of the LCP and the polyolefin is in the range of from 1 to 4.

8. Process according to any one of claims 1 to 7, characterized in that the processing under shear is performed in an extruder.

9. Process according to claim 8, characterized in that the extruder is provided with a multi-hole extrusion head as a result of which fused multi-filament strands are obtained.

10. Process according to anyone of claims 1 to 9, characterized in that the polyolefin is modified by at least one molecule containing at least one polar group.

11. Process according to claim 10, characterized in that the molecule containing at least one polar group is an aliphatic or aromatic unsaturated carboxylic acid or a derivative therefrom.

12. Process according to claim 11, characterized in that the carboxylic acid or derivative therefrom is selected from maleic anhydride and 3-azido sulphonyl benzoic acid.

13. Process according to any one of claims 1 to 12, characterized in that said process comprises the steps of:
(a) feeding the polyolefin and the LCP into an extruder,
(b) processing under shear at a temperature which is 1 to 10 °C higher than the solid-nematic phase transition temperature of the LCP,
(c) immediately quenching the hot composite strand leaving the extruder in a water bath, while elongational stress is applied by means of a winding roll which is located after the water bath, and optionally
(d) pelletizing the self-reinforcing composite strand thus obtained.
